# EUROPEAN PATENT APPLICATION

(11) **EP 4 498 224 A1**
(43) Date of publication of application: **29.01.2025**
(21) Application number: 24183116.3
(22) Date of filing: 19.06.2024
(51) Int. Cl.: G06F 3/12, G06K 7/00, H04N 1/00

(54) **METHODS, SYSTEMS, AND APPARATUSES FOR VERIFYING EMBEDDED GRAPHICAL INDICIA**

(30) Priority: 26.07.2023 US 202318359702
(71) Applicant: Hand Held Products, Inc., Charlotte, NC 28202 (US)
(72) Inventor: BOPPELL, David, Charlotte, 28202 (US); CHAN, Kin Song, Charlotte, 28202 (US); FRIEND, Jay, Charlotte, 28202 (US); SCHULZ-JANISCH, Christian Knut, Charlotte, 28202 (US)
(74) Representative: Haseltine Lake Kempner LLP

(57) **Abstract**

Various examples in accordance with the present disclosure provide example methods, systems, and apparatuses that may verify embedded graphical indicia.

## Description

### FIELD OF THE INVENTION

Example embodiments of the present disclosure relate generally to printing apparatuses and, more particularly, to methods, systems and apparatuses that verify embedded graphical indicia.

### BACKGROUND

Applicant has identified many technical challenges and difficulties associated with printing apparatuses.

### BRIEF SUMMARY

Various embodiments described herein related to methods, apparatuses, and systems for verifying embedded graphical indicia are provided.

In accordance with some embodiments of the present disclosure, example printing apparatuses for verifying embedded graphical indicia in printed media are provided.

In some embodiments, an example printing apparatus comprises at least one processor and at least one memory comprising program code. In some embodiments, the at least one memory and the program code are configured to, with the at least one processor, cause the printing apparatus to: generate a predicted characteristic data object associated with one or more embedded graphical indicia based on one or more graphical image data objects from an image buffer; generate an identified characteristic data object associated with the one or more embedded graphical indicia based on one or more graphical indicia characteristic user input data objects; determine whether the predicted characteristic data object matches the identified characteristic data object; and in response to determining that the predicted characteristic data object matches the identified characteristic data object, perform one or more verification operations associated with the printed media.

In some embodiments of example printing apparatuses, prior to generating the predicted characteristic data object, the at least one memory and the program code are configured to, with the at least one processor, cause the example printing apparatuses to: receive one or more print script data objects; generate the one or more graphical image data objects based at least in part on the one or more print script data objects; and store the one or more graphical image data objects in the image buffer.

In some embodiments of example printing apparatuses, the at least one memory and the program code are configured to, with the at least one processor, cause the example printing apparatuses to generate the predicted characteristic data object based at least in part on inputting the one or more graphical image data objects to an embedded graphical indicia prediction machine learning model.

In some embodiments of example printing apparatuses, the at least one memory and the program code are configured to, with the at least one processor, cause the example printing apparatuses to: receive the one or more graphical indicia characteristic user input data objects from a graphical indicia characteristic identification user interface.

In some embodiments of example printing apparatuses, the predicted characteristic data object indicates a predicted number associated with the one or more embedded graphical indicia. In some embodiments of example printing apparatuses, the identified characteristic data object indicates an actual number associated with the one or more embedded graphical indicia.

In some embodiments of example printing apparatuses, the predicted characteristic data object indicates one or more predicted symbology types associated with the one or more embedded graphical indicia. In some embodiments of example printing apparatuses, the identified characteristic data object indicates one or more actual symbology types associated with the one or more embedded graphical indicia.

In some embodiments of example printing apparatuses, the predicted characteristic data object indicates one or more predicted positions associated with the one or more embedded graphical indicia. In some embodiments of example printing apparatuses, the identified characteristic data object indicates one or more actual positions associated with the one or more embedded graphical indicia.

In some embodiments of example printing apparatuses, the predicted characteristic data object indicates one or more predicted sizes associated with the one or more embedded graphical indicia. In some embodiments of example printing apparatuses, the identified characteristic data object indicates one or more actual sizes associated with the one or more embedded graphical indicia.

In some embodiments of example printing apparatuses, the at least one memory and the program code are configured to, with the at least one processor, cause the printing apparatus to: in response to determining that the predicted characteristic data object does not match the identified characteristic data object, generate a characteristic mismatch alert data object.

In some embodiments of example printing apparatuses, the characteristic mismatch alert data object indicates an incomplete verification operation associated with the printed media.

In accordance with some embodiments of the present disclosure, example computer program products for verifying embedded graphical indicia in printed media are provided.

In some embodiments, an example computer program product comprises at least one non-transitory computer-readable storage medium having computer-readable program code portions stored therein. In some embodiments, the computer-readable program code portions comprise an executable portion configured to: generate a predicted characteristic data object associated with one or more embedded graphical indicia based on one or more graphical image data objects from an image buffer; generate an identified characteristic data object associated with the one or more embedded graphical indicia based on one or more graphical indicia characteristic user input data objects; determine whether the predicted characteristic data object matches the identified characteristic data object; and in response to determining that the predicted characteristic data object matches the identified characteristic data object, perform one or more verification operations associated with the printed media.

In some embodiments of example computer program products, the computer-readable program code portions comprise the executable portion configured to: receive one or more print script data objects; generate the one or more graphical image data objects based at least in part on the one or more print script data objects; and store the one or more graphical image data objects in the image buffer.

In some embodiments of example computer program products, the computer-readable program code portions comprise the executable portion configured to generate the predicted characteristic data object based at least in part on inputting the one or more graphical image data objects to an embedded graphical indicia prediction machine learning model.

In some embodiments of example computer program products, the computer-readable program code portions comprise the executable portion configured to: receive the one or more graphical indicia characteristic user input data objects from a graphical indicia characteristic identification user interface.

In some embodiments of example computer program products, the predicted characteristic data object indicates a predicted number associated with the one or more embedded graphical indicia. In some embodiments of example computer program products, the identified characteristic data object indicates an actual number associated with the one or more embedded graphical indicia.

In some embodiments of example computer program products, the predicted characteristic data object indicates one or more predicted symbology types associated with the one or more embedded graphical indicia. In some embodiments of example computer program products, the identified characteristic data object indicates one or more actual symbology types associated with the one or more embedded graphical indicia.

In some embodiments of example computer program products, the predicted characteristic data object indicates one or more predicted positions associated with the one or more embedded graphical indicia. In some embodiments of example computer program products, the identified characteristic data object indicates one or more actual positions associated with the one or more embedded graphical indicia.

In some embodiments of example computer program products, the predicted characteristic data object indicates one or more predicted sizes associated with the one or more embedded graphical indicia. In some embodiments of example computer program products, the identified characteristic data object indicates one or more actual sizes associated with the one or more embedded graphical indicia.

In some embodiments of example computer program products, the computer-readable program code portions comprise the executable portion configured to: in response to determining that the predicted characteristic data object does not match the identified characteristic data object, generate a characteristic mismatch alert data object.

In some embodiments of example computer program products, the characteristic mismatch alert data object indicates an incomplete verification operation associated with the printed media.

In accordance with some embodiments of the present disclosure, example computer-implemented methods for verifying embedded graphical indicia in printed media are provided.

In some embodiments, an example computer-implemented method comprises: generating, by a processor, a predicted characteristic data object associated with one or more embedded graphical indicia based on one or more graphical image data objects from an image buffer; generating, by the processor, an identified characteristic data object associated with the one or more embedded graphical indicia based on one or more graphical indicia characteristic user input data objects; determining, by the processor, whether the predicted characteristic data object matches the identified characteristic data object; and in response to determining that the predicted characteristic data object matches the identified characteristic data object, performing, by the processor, one or more verification operations associated with the printed media.

In some embodiments, example computer-implemented methods further comprise receiving one or more print script data objects; generating the one or more graphical image data objects based at least in part on the one or more print script data objects; and storing the one or more graphical image data objects in the image buffer.

In some embodiments, example computer-implemented methods further comprise generating the predicted characteristic data object based at least in part on inputting the one or more graphical image data objects to an embedded graphical indicia prediction machine learning model.

In some embodiments, example computer-implemented methods further comprise receiving the one or more graphical indicia characteristic user input data objects from a graphical indicia characteristic identification user interface.

In some embodiments of example computer-implemented methods, the predicted characteristic data object indicates a predicted number associated with the one or more embedded graphical indicia. In some embodiments of example computer-implemented methods, the identified characteristic data object indicates an actual number associated with the one or more embedded graphical indicia.

In some embodiments of example computer-implemented methods, the predicted characteristic data object indicates one or more predicted symbology types associated with the one or more embedded graphical indicia. In some embodiments of example computer-implemented methods, the identified characteristic data object indicates one or more actual symbology types associated with the one or more embedded graphical indicia.

In some embodiments of example computer-implemented methods, the predicted characteristic data object indicates one or more predicted positions associated with the one or more embedded graphical indicia. In some embodiments of example computer-implemented methods, the identified characteristic data object indicates one or more actual positions associated with the one or more embedded graphical indicia.

In some embodiments of example computer-implemented methods, the predicted characteristic data object indicates one or more predicted sizes associated with the one or more embedded graphical indicia. In some embodiments of example computer-implemented methods, the identified characteristic data object indicates one or more actual sizes associated with the one or more embedded graphical indicia.

In some embodiments, example computer-implemented methods further comprises, in response to determining that the predicted characteristic data object does not match the identified characteristic data object, generate a characteristic mismatch alert data object.

In some embodiments of example computer-implemented methods, the characteristic mismatch alert data object indicates an incomplete verification operation associated with the printed media.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A provides an example perspective view of an example printing apparatus in accordance with some embodiments of the present disclosure;
FIG. 1B provides an example perspective view of an example portion of the example printing apparatus shown in FIG. 1A in accordance with some embodiments of the present disclosure;
FIG. 1C provides an example top view of an example portion of the example printing apparatus shown in FIG. 1A in accordance with some embodiments of the present disclosure;
FIG. 2 provides an example schematic block diagram that illustrates example components associated with an example printing apparatus in accordance with some embodiments of the present disclosure;
FIG. 3 provides an example schematic block diagram that illustrates example components associated with an example printing apparatus in accordance with some embodiments of the present disclosure;
FIG. 4 provides an example flow diagram illustrating example methods in accordance with some embodiments of the present disclosure;
FIG. 5 provides an example process chart illustrating example methods in accordance with some embodiments of the present disclosure;
FIG. 6 illustrates an example graphical indicia characteristic identification user interface in accordance with some embodiments of the present disclosure;
FIG. 7 illustrates an example graphical indicia characteristic identification user interface in accordance with some embodiments of the present disclosure;
FIG. 8 illustrates an example graphical indicia characteristic identification user interface in accordance with some embodiments of the present disclosure; and
FIG. 9 provides an example process chart illustrating example methods in accordance with some embodiments of the present disclosure.

### DETAILED DESCRIPTION OF THE INVENTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on," "based at least on," "based at least in part on," "based upon," and/or similar words are used herein interchangeably in an open-ended manner such that they do not necessarily indicate being based only on or based solely on the referenced element or elements unless so indicated. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

In various example embodiments, the term "print media" is used herein to mean a printable medium (such as a page or a paper) on which print images (such as graphics, text, and/or visual images) may be printed. The print media may correspond to a continuous media that may be loaded in a printing apparatus in form of a roll or a stack. In some embodiments, the scope of the disclosure is not limited to having a continuous media. In some embodiments, the print media may be divided into one or more portions through perforations defined along a width of the print media. In alternative embodiments, the print media is divided into the one or more portions through one or more marks that are defined at a predetermined distance from each other, along the length of the print media. In an example embodiment, a contiguous stretch of the print media, between two consecutive marks or two consecutive perforations, corresponds to a portion of the print media. In some embodiments, the print media may correspond to a thermal media on which the content is printed through application of heat on the print media itself. In alternative embodiments, the print media may correspond to a liner media, a liner-less media, and/or the like.

In various example embodiments, the term "print image" is used herein to mean an image that is to be printed on the print media. The print image may include one or more image components, such as, but not limited to, decodable indicia (such as a barcode or a QR code), text content, and the like, in a specified layout.

In the present disclosure, the term "data object" refers to a data structure that represents one or more functionalities and/or characteristics associated with data and/or information. In some embodiments, a data object may be associated with one or more software (for example, one or more computer programs) and/or one or more hardware (for example, one or more processors or one or more memories). For example, a data object may provide a functional unit for one or more computer programs.

In the present disclosure, the term "graphical image data object" refers to a type of data object that comprises, indicates, and/or describes data and/or information associated with a print image. In some embodiments, an example graphical image data object may be rendered and stored in an image buffer of an example printing apparatus.

In various example embodiments, the term "image buffer" refers to a storage area reserved in a memory of a printing apparatus. In some embodiments, the image buffer may store one or more graphical image data objects that comprise or define one or more print images that are to be printed on the print media. Based on the print image from the graphical image data objects in the image buffer, the printing apparatus may be configured to control the printhead of the printing apparatus in an appropriate way at appropriate timing to print the print image on the print media.

In various example embodiments, the term "printhead" is used herein to mean an assembly that includes one or more burn lines to print the print image (retrieved from the image buffer) on the print media. In various example embodiments, the term "burn line" is used herein to mean a printhead component that includes multiple heating elements disposed thereon, which under the control of a control device that is activated in such a pattern that an image, corresponding to the print image stored in the image buffer, is replicated/imprinted on the print media.

For example, an example printhead of an example printing apparatus may include a plurality of heating elements in each burn line that is energized (or heated) and pressed against a ribbon or the print media (such as a thermal paper) to perform a print operation. In some embodiments, during the print operation, only a set of heating elements are energized to perform the print operation. The set of heating elements may be selected based on the position of the various image components included in the print image to be printed on the print media.

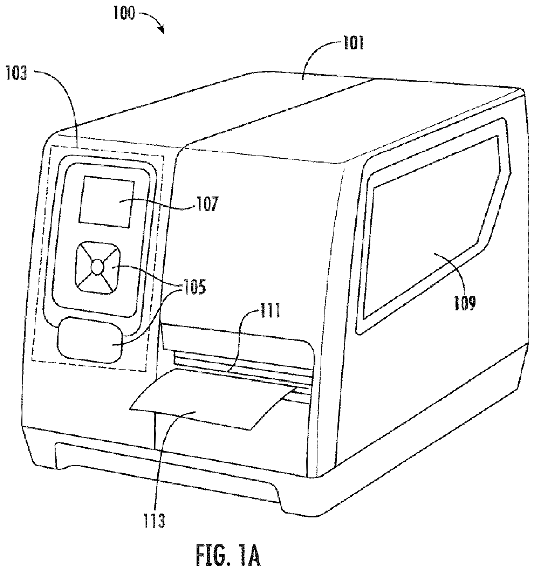

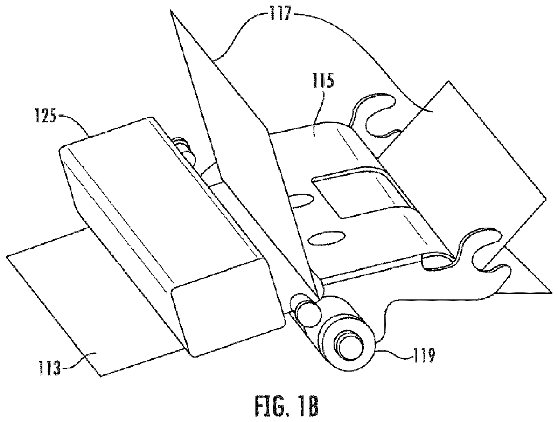

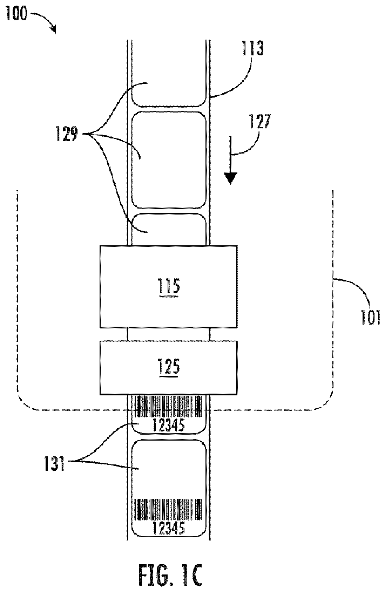

Referring now to FIG. 1A, FIG. 1B, and FIG. 1C, example views associated with an example printing apparatus 100 in accordance with some embodiments of the present disclosure are illustrated.

FIG. 1A provides an example perspective view of the example printing apparatus 100. In some embodiments, the example printing apparatus 100 comprises a housing 101, a user interface component 103 (including one or more user input components 105 and one or more user output components 107), a viewing window 109, and a print media output opening 111.

In some embodiments, the example printing apparatus 100 comprises a printing mechanism that is configured to carry out printing operations on print media 113. For example, the printing mechanism may include, but are not limited to, one or more printheads as described above. Additional details associated with the printing mechanism are described in connection with at least FIG. 1B.

In some embodiments, after print operation is completed, print media 113 exits from the print media output opening 111 of the example printing apparatus 100 as shown in FIG. 1A. In some embodiments, the print media output opening 111 corresponds to a slot in the housing 101 of the printing apparatus 100 through which the printed media (for example, printed label) exits.

In some embodiments, the example printing apparatus 100 comprises an indicium verifier positioned inside the housing 101. Referring now to FIG. 1B, example interior components of the example printing apparatus 100 are illustrated. In some embodiments, these interior components may be incorporated entirely within the housing 101 of the example printing apparatus 100 of FIG. 1A.

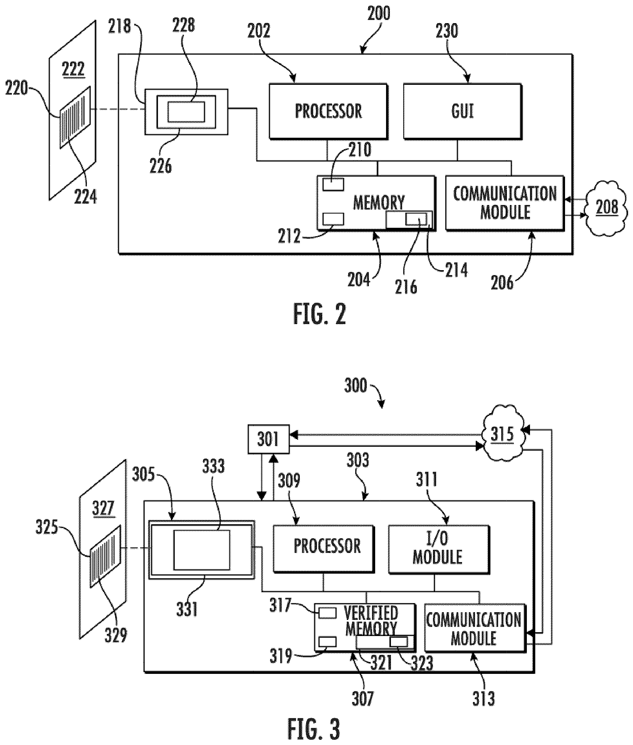

In the example shown in FIG. 1A and/or FIG. 1B, the indicium verifier 125 may be positioned at or around the print media output opening 111. In some embodiments, an indicium verifier 125 may be a part of the example printing apparatus 100 and configured to perform verification operations before and/or after the print media 113 have exited the example printing apparatus 100. For example, the indicium verifier 125 associated with the example printing apparatus 100 may be configured to analyze the print quality of images printed onto the print media (such as, but not limited to, labels with decodable indicia). In some embodiments, the indicium verifier 125 may further perform one or more verification operations that include, but not limited to, comparing the analyzed print quality with certain quality standards, such as ISO/IEC 15415, ISO/IEC 15416, ISO/IEC 15426-1, ISO/IEC 15426-2, ANSI X3.182, among others. In some embodiments, if the print quality does not meet the standards or contains parameters that fall below a minimum acceptable threshold (for example, as defined by the quality standards), then the indicium verifier 125 may print diagnostic information onto the print media. Example diagnostic information may include, but are not limited to, gray levels, ANSI grade levels, numeric ANSI grades, and/or bar width growth percentages. Additional details associated with the indicium verifier 125 are described herein, including, but not limited to, those described in connection with at least FIG. 2 and FIG. 3.

In some embodiments, the example printing apparatus 100 comprises a media roll that provides print media 113. In an example embodiment, the media roll may correspond to a roll of a print media 113 that may be a continuous media or may, in some example embodiments, include a plurality of labels that are defined (in or on the print media 113) by means of one or more perforations or one or more marks. In an example embodiment, the plurality of labels in or on the print media 113 may correspond to portions on which the printing apparatus 100 may be configured to print content. In some examples, the one or more perforations and/or the one or more marks may define an edge between two adjacent labels.

In an example embodiment, the media roll is received by a media hub, which in turn is coupled to a first electrical drive (for example, a motor) that actuates the media hub. On actuation, the media hub causes the media roll to rotate, which further causes the media roll to supply the print media 113 to the printing mechanism 115.

In some embodiments, the printing mechanism 115 utilizes an ink ribbon 117 and thermally transfers ink from the ink ribbon 117 to the print media 113 as the print media 113 passes through the printing mechanism 115.

In some embodiments, the example printing apparatus 100 comprises a ribbon roll that provides the ink ribbon 117. In an example embodiment, the ink ribbon 117 may correspond to an ink media that can dispose ink onto the print media 113 to print content on the print media 113.

In an example embodiment, the ribbon roll is received by a ribbon drive assembly, which may be coupled to a second electrical drive (for example, a motor) that may be configured to actuate the ribbon drive assembly. On actuation of the ribbon drive assembly, the ribbon drive assembly rotates, which causes the ribbon roll to rotate and supply the ink ribbon 117 along a ribbon path. Along the ribbon path, the ink ribbon 117 traverses from the ribbon roll to the printing mechanism 115.

In some embodiments, the printing mechanism 115 comprises a thermal printhead. For example, the printing mechanism 115 may correspond to a component that is configured to print content on the print media 113. In an example embodiment, the printing mechanism 115 may include a plurality of heating elements that are energized and pressed against the ink ribbon 117 to perform a print operation. In operation, the printing mechanism 115 applies heat on the section of the ink ribbon 117 and, concurrently, presses the ink ribbon 117 against the print media 113 to transfer the ink on the print media 113. To press the ink ribbon 117 against the print media 113, the printing mechanism 115 travels in a downward direction (for example, a vertically downward direction) to push the ink ribbon 117 against the print media 113. In embodiments where the print media 113 comprises thermal paper, the printing mechanism 115 may be directly pressed against the thermal paper to perform one or more print operations to generate printed media. In the present disclosure, the term "printed media" refers to print media that have one or more print images printed on.

In some embodiments, one or more heating elements of the plurality of heating elements are energized to perform the print operation. In some embodiments, the one or more heating elements may be selected based on the data in a print job (for example, the print image according to the graphical image data object). For example, if a barcode is to be printed, the one or more heating elements (that are energized) are positioned on the printing mechanism 115 in such a manner that, when the printing mechanism 115 is pressed against the ink ribbon 117 and the print media 113, the barcode gets printed on the print media 113.

In some embodiments, the example printing apparatus 100 comprises a platen roller 119 configured for moving the print media 113 through the example printing apparatus 100. In some embodiments, the platen roller 119 provides a surface for supporting the print media 113 when the printing mechanism 115 applies ink from the ink ribbon 117 to the print media 113.

In an example embodiment, after the print operation, the print media 113 and the ink ribbon 117 traverse along a media path and a ribbon path, respectively. In some embodiments, the print media 113 traverses along the media path below the indicium verifier 125 after the print operation. In some embodiments, the indicium verifier 125 may include an image capturing device that is configured to capture an image of the printed content (for example, the printed indicium on the print media 113). Based on the image of the printed content, the printing apparatus 100 (for example, the indicium verifier 125 of the printing apparatus 100) may perform one or more verification operations to verify the printed media (i.e. determine whether the printed content on the printed media is acceptable). In some examples, the results from the verification operations of the printed content may enable the printing apparatus 100 to perform various additional operations such as, but not limited to, correcting the printed content and/or detecting an error in printed content.

In some embodiments, the indicium verifier 125 may determine information regarding the ANSI grades associated with the printed media (for example, by evaluating the gray-level image to a standard such as ISO/IEC 15415 and 15416). In some embodiments, information regarding the ANSI grades may be stored in a digital file for later retrieval or displayed temporarily on a computer screen. In the example shown in FIG. 1B (where the indicium verifier 125 is located in proximity to the printing mechanism 115), the indicium verifier 125 may instruct the printing mechanism 115 to immediately print the diagnostic information onto the same label that is being printed. In some embodiments, the indicium verifier 125 may instruct the platen roller 119 to retract the print media 113 to print the diagnostic information.

In the present disclosure, detailed print quality information and/or diagnostic information can be printed directly on a failed label. Examples of useful information that can be printed on the label may include an ANSI grading level (e.g., "A"-"F"), a numeric ANSI grade level (e.g., from 0.0 to 4.0), a pass/fail grade, and/or the like.

As such, according to some embodiments, a printer (e.g., the example printing apparatus 100) may comprise the printing mechanism 115 configured to print images onto print media 113. The printer (e.g., the example printing apparatus 100) may further comprise the indicium verifier 125 configured to monitor the print quality of images printed onto the print media. The indicium verifier 125 may be configured to analyze the print quality to determine if the print quality meets predetermined quality standards. In some embodiments, when the indicium verifier 125 determines that the print quality does not meet the predetermined quality standards, the indicium verifier 125 may instruct the printing mechanism 115 to print diagnostic information onto the print media.

Referring now to FIG. 1C, an example block diagram showing an embodiment of example components of the example printing apparatus 100.

The example printing apparatus 100 shown in FIG. 1C comprises the printing mechanism 115 and the indicium verifier 125. It should be noted that these elements may be disposed completely or partially inside the housing 101 of the example printing apparatus 100.

In some embodiments, during operation, the print media 113 is fed through the example printing apparatus 100 in the direction of the arrow 127 as shown in FIG. 1C. In some embodiments, the print media 113 may include blank labels 129 onto which the printing mechanism 115 prints images on to produce printed indicium 131 that are fed through a print media output opening of the example printing apparatus 100.

In some embodiments, the indicium verifier 125 may be incorporated into the structure of the housing 101 itself or positioned at or near a print media output opening of the example printing apparatus 100. In some embodiments, the indicium verifier 125 may be a contact image sensor (CIS) device, a one-dimensional image scanner, a two-dimensional image sensor, a scanner, and/or other device for capturing the images printed on the print media 113 (for example, printed indicium 131 that is printed on the print media 113).

As described above, the example printing apparatus 100 can be configured such that the printing mechanism 115 and the indicium verifier 125 (comprising a CIS device) are positioned adjacent to or near each other. In this way, the sensing or scanning of the print quality can take place immediately after the printing mechanism 115 prints images onto the print media 113. In some embodiments, after the verification of the printed indicium 131, the printed media (along with the printed indicium 131) exits through the print media output opening of the housing 101 of the example printing apparatus 100.

While the printing apparatus 100 shown in FIG. 1A to FIG. 1C illustrates an example thermal transfer printing apparatus, it is to be understood that various embodiments of the present invention may be used in other types of printing apparatus (such as, but not limited to, ink-drop printing apparatus, laser-toner printing apparatus, etc.).

Referring now to FIG. 2, an example block diagram of the printing apparatus 200 is illustrated. In some embodiments, the printing apparatus 200 may comprise components similar to those of the printing apparatus 100 described above in connection with FIG. 1A to FIG. 1C. In some embodiments, the printing apparatus 200 may comprise a processor 202, a memory 204 communicatively coupled to the processor 202, and a power source. The printing apparatus 200 may further comprise a communications module 206 communicatively coupled to one or more of the other printing apparatus components.

In some embodiments, the processor 202 comprises electronic circuitry that carries out the instructions of a computer program by performing the basic arithmetic, logical, control and input/output (I/O) operations specified by the instructions as described herein. In some embodiments, the processor 202 may be embodied in a number of different ways. For example, the processor 202 may be embodied as one or more central processing units (CPUs), microcontrollers, microprocessors, controllers, multi-core processors, complex programmable logic devices (CPLDs), co-processing entities, application-specific instruction-set processors (ASIPs), and/or the like. Additionally, or alternatively, the processor 202 may be embodied as one or more other forms of processing devices or circuitry. In the present disclosure, the term "circuitry" may refer to an entirely hardware embodiment or a combination of hardware and computer program products. In some embodiments, the processor 202 may be embodied as integrated circuits, application specific integrated circuits (ASICs), field programmable gate arrays (FPGAs), programmable logic arrays (PLAs), hardware accelerators, other circuitry, and/or the like. In some embodiments, the processor 202 may be configured for a particular use or configured to execute instructions stored in the memory (including volatile data storage media and/or the non-volatile data storage media) and/or otherwise accessible to the processor 202. As such, whether configured by hardware or computer program products, or by a combination thereof, the processor 202 may be capable of performing steps or operations according to embodiments of the present disclosure when configured accordingly.

In some embodiments, the printing apparatus 200 may be communicatively connected using the communications module 206 to a network 208 and/or one or more computers or via a wired or wireless data link. In one or more example wireless configurations, the communications module 206 may communicate with one or more computing entities over the network 208 via a variety of communication protocols that include, but not limited to, general packet radio service (GPRS), Universal Mobile Telecommunications System (UMTS), Code Division Multiple Access 4000 (CDMA4000), CDMA4000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), Ultra-Wideband (UWB), infrared (IR) protocols, Near Field Communication (NFC) protocols, Wibree, Bluetooth protocols, wireless USB protocols, and/or any other wireless protocol. In one or more example wired configurations, the printing apparatus 200 may be communicatively connected using the communications module 206 to a network 208 and/or one or more computers according to one or more wired data transmission protocols, such as, but not limited to, Double Data Rate (DDR), Peripheral Component Interconnect (PCI), PCI Express, Serial Advanced Technology Attachment (Serial ATA), Fiber Distributed Data Interface (FDDI), Digital Subscriber Line (DSL), Ethernet, Asynchronous Transfer Mode (ATM), Non-Volatile Memory Express (NVMe), Small Computer system Interface (SCSI), Inter-Integrated Circuit (I2C), Serial Peripheral Interface (SPI), Universal Serial Bus (USB), frame relay, Data Over Cable Service Interface Specification (DOCSIS), and/or any other wired transmission protocol. Additionally, or alternatively, in some embodiments, the communications module 206 may be configured to communicate via one or more additional and/or alternative communication protocols.

In some embodiments, the terms "host device," "computing device," "computing entity," "computer," and/or similar words used herein interchangeably refer to, for example, one or more computers, desktops, mobile phones, tablets, phablets, notebooks, laptops, distributed systems, kiosks, input terminals, servers, server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating, generating, monitoring, evaluating, comparing, and/or similar terms used herein interchangeably. In some embodiments, these functions, operations, and/or processes can be performed on data, content, information, and/or similar terms used herein interchangeably.

In some embodiments, the example printing apparatus 200 comprises, or is in communication with, the memory 204 that may include, but not limited to, non-volatile data storage media (also referred to as non-volatile memory, non-volatile storage, non-volatile media, non-volatile memory storage, non-volatile memory circuitry and/or similar terms used herein interchangeably) and/or volatile data storage media (also referred to as volatile memory, volatile storage, volatile media, volatile memory storage, volatile memory circuitry and/or similar terms used herein interchangeably).

In some embodiments, non-volatile data storage media may include, but not limited to, hard disks, read-only memory (ROM), programmable read-only memory (PROM), erasable programmable read-only memory (EPROM), electrically erasable programmable read-only memory (EEPROM), and/or the like. Additionally, or alternatively, in some embodiments, the non-volatile data storage media may include, but not limited to, Hard Disk Drives (HDDs), Solid-State Drives (SSDs), flash memory (such as, but not limited to, Serial Flash Memory, NAND Flash Memory, NOR Flash Memory, and/or the like), multimedia memory cards (MMCs), secure digital (SD) memory cards, SmartMedia cards, CompactFlash (CF) cards, Memory Sticks, and/or the like. Additionally, or alternatively, the non-volatile data storage media may include, but not limited to, Conductive-Bridging Random Access Memory (CBRAM), Phase-change RAM (PRAM), Ferroelectric RAM (FeRAM), Non-Volatile RAM (NVRAM), Magnetic RAM (MRAM), Resistive RAM (RRAM), Silicon-Oxide-Nitride-Oxide-Silicon (SONOS), Floating Junction Gate RAM (FJG RAM), millipede memory, racetrack memory, and/or the like.

In some embodiments, volatile storage or memory may also include, but not limited to, random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), and/or the like.

In some embodiments, the memory 204 may store databases, database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

In some embodiments, the memory 204 may be used to store at least portions of the databases, database instances, database management systems, data, applications, programs, program modules, scripts, source code, object code, byte code, compiled code, interpreted code, machine code, executable instructions, and/or the like being executed by, for example, the processor 202. Thus, the databases, database instances, database management systems, data, applications, programs, program modules, scripts, source code, object code, byte code, compiled code, interpreted code, machine code, executable instructions, and/or the like may be used to control certain aspects of the operation of the example printing apparatus 200 with the assistance of the processor 202.

In accordance with various embodiments of the present invention, the memory 204 is configured to store, for example but not limited to, a printer firmware 210 and a print quality verification program 212. In some embodiments, the printer firmware 210 comprises code and/or program that is embedded into the memory 204 of the printing apparatus 200 to provide basic printing functions for the printing apparatus 200. In some embodiments, the print quality verification program 212 may comprise and/or define one or more verification operations to be performed by the example printing apparatus 200.

Additionally, or alternatively, the memory 204 may comprise an image buffer 214 that stores one or more graphical image data objects 216. Similar to those examples described above, the image buffer 214 comprises a dedicated memory area or storage system that is used to store image data before the image data is used in the printing operation. For example, the image buffer 214 may store one or more graphical image data objects 216 that comprise data and/or information associated with the print image to be printed on the print media as described above.

In some embodiments, the graphic user interface (GUI) 230 may be operationally/communicatively coupled to the processor 202 for controlling the operation of the printing apparatus 200, in addition to other functions. In some embodiments, the GUI 230 may comprise a display (for example, but not limited to, a touch screen) that may render one or more user interfaces in accordance with some embodiments of the present disclosure such as, but not limited to, one or more graphical indicia characteristic identification user interfaces. Additional details associated with the one or more graphical indicia characteristic identification user interfaces are described herein.

In the example shown in FIG. 2, an indicium verifier 218 is disposed in the printing apparatus 200 and is configured to capture a representation of the printed media (for example, but not limited to, printed barcode 220 on print medium 222 within a field of view 224), using an image sensor 226 (for example, but not limited to, an image sensor of the indicium verifier 218) to obtain a captured image. In some embodiments, the image sensor 226 comprises a light source 228 for illuminating the field of view. In some embodiments, the image sensor 226 uses an imaging lens (or lenses) to form a real image of the field of view 224 on an array of photo sensors (e.g., a linear or two-dimensional (2D) array charge-coupled device (CCD), complementary metal-oxide-semiconductor (CMOS) sensor, etc.). In some embodiments, electronic signals from the photo sensors are used to create gray level or color images, which would result in a digital image similar to that which may be obtained by a digital camera. In some embodiments, the processor 202 is further configured to carry out steps of methods as described above in accordance with various embodiments of the present invention.

Referring now to FIG. 3, an example printing apparatus 301 (e.g. a printing mechanism) communicatively coupled to an example indicium verifier 303 in the system 300 for printing an image and verifying a print quality of the printed media is shown.

In some embodiments, the printing apparatus 301 may be similar to the printing apparatus 100 depicted in FIG. 1A to FIG. 1C, except that the indicium verifier 303 is separated from the printing apparatus 301 in the system 300 as shown in FIG. 3.

In some embodiments, the printing apparatus 301 may comprise components similar to those of the printing apparatus 100 described above in connection with FIG. 1A to FIG. 1C. In some embodiments, the printing apparatus 301 may comprise a processor, a memory communicatively coupled to the processor, and a power source. In some embodiments, the printing apparatus 301 may comprise a communications module communicatively coupled to one or more of the other components. In some embodiments, the printing apparatus 301 may have a fewer or greater number of components as described above.

In some embodiments, the indicium verifier 303 comprises an imaging module 305, a memory (for example, but not limited to, a verifier memory 307) communicatively coupled to the imaging module 305 and a verifier processor 309 (for example, but not limited to, a central processing unit (CPU)) communicatively coupled to the verifier memory 307 and the imaging module 305. In some embodiments, the indicium verifier 303 may further comprise an I/O module 311 and a verifier communication module 313.

In some embodiments, the verifier processor 309 comprises electronic circuitry that carries out the instructions of a computer program by performing the basic arithmetic, logical, control and input/output (I/O) operations specified by the instructions as described herein. In some embodiments, the verifier processor 309 may be embodied in a number of different ways. For example, the verifier processor 309 may be embodied as one or more central processing units (CPUs), microcontrollers, microprocessors, controllers, multi-core processors, complex programmable logic devices (CPLDs), co-processing entities, application-specific instruction-set processors (ASIPs), and/or the like. Additionally, or alternatively, the verifier processor 309 may be embodied as one or more other forms of processing devices or circuitry. In the present disclosure, the term "circuitry" may refer to an entirely hardware embodiment or a combination of hardware and computer program products. In some embodiments, the verifier processor 309 may be embodied as integrated circuits, application specific integrated circuits (ASICs), field programmable gate arrays (FPGAs), programmable logic arrays (PLAs), hardware accelerators, other circuitry, and/or the like. In some embodiments, the verifier processor 309 may be configured for a particular use or configured to execute instructions stored in the memory (including volatile data storage media and/or the non-volatile data storage media) and/or otherwise accessible to the verifier processor 309. As such, whether configured by hardware or computer program products, or by a combination thereof, the verifier processor 309 may be capable of performing steps or operations according to embodiments of the present disclosure when configured accordingly.

In some embodiments, the verifier memory 307 may include, but not limited to, non-volatile data storage media (also referred to as non-volatile memory, non-volatile storage, non-volatile media, non-volatile memory storage, non-volatile memory circuitry and/or similar terms used herein interchangeably) and/or volatile data storage media (also referred to as volatile memory, volatile storage, volatile media, volatile memory storage, volatile memory circuitry and/or similar terms used herein interchangeably).

In some embodiments, non-volatile data storage media may include, but not limited to, hard disks, read-only memory (ROM), programmable read-only memory (PROM), erasable programmable read-only memory (EPROM), electrically erasable programmable read-only memory (EEPROM), and/or the like. Additionally, or alternatively, in some embodiments, the non-volatile data storage media may include, but not limited to, Hard Disk Drives (HDDs), Solid-State Drives (SSDs), flash memory (such as, but not limited to, Serial Flash Memory, NAND Flash Memory, NOR Flash Memory, and/or the like), multimedia memory cards (MMCs), secure digital (SD) memory cards, SmartMedia cards, CompactFlash (CF) cards, Memory Sticks, and/or the like. Additionally, or alternatively, the non-volatile data storage media may include, but not limited to, Conductive-Bridging Random Access Memory (CBRAM), Phase-change RAM (PRAM), Ferroelectric RAM (FeRAM), Non-Volatile RAM (NVRAM), Magnetic RAM (MRAM), Resistive RAM (RRAM), Silicon-Oxide-Nitride-Oxide-Silicon (SONOS), Floating Junction Gate RAM (FJG RAM), millipede memory, racetrack memory, and/or the like.

In some embodiments, volatile storage or memory may also include, but not limited to, random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), and/or the like.

In some embodiments, the verifier memory 307 may store databases, database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

In some embodiments, the verifier memory 307 may be used to store at least portions of the databases, database instances, database management systems, data, applications, programs, program modules, scripts, source code, object code, byte code, compiled code, interpreted code, machine code, executable instructions, and/or the like being executed by, for example, the processor 202. Thus, the databases, database instances, database management systems, data, applications, programs, program modules, scripts, source code, object code, byte code, compiled code, interpreted code, machine code, executable instructions, and/or the like may be used to control certain aspects of the verification operations with the assistance of the verifier processor 309.

In accordance with various embodiments of the present invention, the verifier memory 307 is configured to store, for example but not limited to, a verifier firmware 317 and a print quality verification program 319. In some embodiments, the verifier firmware 317 comprises code and/or program that is embedded into the verifier memory 307 to provide verification operations for the example indicium verifier 303. In some embodiments, the print quality verification program 319 may comprise and/or define one or more verification operations to be performed by the example indicium verifier 303.

Additionally, or alternatively, the verifier memory 307 may comprise an image buffer 321 that stores one or more graphical image data objects 323. Similar to those examples described above, the image buffer 321 comprises a dedicated memory area or storage system of the verifier memory 307 for storing one or more print images that are used in printing operations and/or verification operations. For example, the image buffer 321 may store one or more graphical image data objects 323 that comprise data and/or information associated with one or more print images to be printed on the print media as described above. In some embodiments, the one or more graphical image data objects 323 may be used in the one or more verification operations described herein.

In some embodiments, the subsystems in the indicium verifier 303 of FIG. 3 are electrically connected via a coupler (e.g., wires, traces, etc.) to form an interconnection subsystem. In some embodiments, the interconnection system may include power buses or lines, data buses, instruction buses, address buses, etc. that allow operation of the modules/subsystems and the interaction there between.

While the examples shown in FIG. 3 depict a verifier memory 307 and a verifier processor 309 in the indicium verifier 303, it is noted that the scope of the present disclosure is not limited to the example shown in FIG. 3. In some embodiments, only the printing apparatus 301, only the indicium verifier 303, or both the printing apparatus 301 and indicium verifier 303 communicatively coupled thereto may comprise the memory and the processor for executing the steps as described above (for example, at least one of the indicium verifier and the printing apparatus comprises a memory communicatively coupled to the imaging module and a processor communicatively coupled to the imaging module and memory). In some embodiments, the indicium verifier 303 that is attached to the printing apparatus may rely on the memory and the processor of printing apparatus for executing steps as described herein, and/or the indicium verifier 303 is a standalone device that has its own verifier memory 307 and verifier processor 309 for executing the steps as described herein. Additionally, or alternatively, the printing apparatus may rely on the verifier memory 307 and the verifier processor 309 of indicium verifier 303 attached to the printing apparatus for executing the steps as described herein.

In some embodiments, the imaging module 305 disposed in indicium verifier 303 is configured to capture the representation of the printed image (e.g., the printed barcode 325 on the print media 327 in FIG. 3) within a field of view 329 using the image sensor 331 (i.e., an image sensor from the imaging module 305). In some embodiments, the image sensor 331 comprises the light source 333 for illuminating the field of view 329. In some embodiments, the image sensor 331 uses an imaging lens (or lenses) to form a real image of the field of view 329 on an array of photo sensors (such as, but not limited to, a linear or two-dimensional (2D) array charge-coupled device (CCD), complementary metal-oxide-semiconductor (CMOS) sensor, contact image sensor (CIS) device, etc.). In some embodiments, electronic signals from the photo sensors are used to create gray level or color images (which would result in a digital image that may be obtained by a digital camera).

In some embodiments, the indicium verifier 303 may comprise a verifier communication module 313 for communication with one or more computers or the network 315 via a wired or wireless data link. In one or more example wireless configurations, the verifier communication module 313 may communicate with one or more computing entities over the network 315 via a variety of communication protocols that include, but not limited to, general packet radio service (GPRS), Universal Mobile Telecommunications System (UMTS), Code Division Multiple Access 4000 (CDMA4000), CDMA4000 1X (lxRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), Ultra-Wideband (UWB), infrared (IR) protocols, Near Field Communication (NFC) protocols, Wibree, Bluetooth protocols, wireless USB protocols, and/or any other wireless protocol. In one or more example wired configurations, indicium verifier 303 may be communicatively connected using the verifier communication module 313 to a network 315 and/or one or more computers according to one or more wired data transmission protocols, such as, but not limited to, Double Data Rate (DDR), Peripheral Component Interconnect (PCI), PCI Express, Serial Advanced Technology Attachment (Serial ATA), Fiber Distributed Data Interface (FDDI), Digital Subscriber Line (DSL), Ethernet, Asynchronous Transfer Mode (ATM), Non-Volatile Memory Express (NVMe), Small Computer system Interface (SCSI), Inter-Integrated Circuit (I2C), Serial Peripheral Interface (SPI), Universal Serial Bus (USB), frame relay, Data Over Cable Service Interface Specification (DOCSIS), and/or any other wired transmission protocol. Additionally, or alternatively, in some embodiments, the verifier communication module 313 may be configured to communicate via one or more additional and/or alternative communication protocols.

In some embodiments, the terms "host device," "computing device," "computing entity," "computer," and/or similar words used herein interchangeably refer to, for example, one or more computers, desktops, mobile phones, tablets, phablets, notebooks, laptops, distributed systems, kiosks, input terminals, servers, server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating, generating, monitoring, evaluating, comparing, and/or similar terms used herein interchangeably. In some embodiments, these functions, operations, and/or processes can be performed on data, content, information, and/or similar terms used herein interchangeably.

In some embodiments, the I/O module 311 may include a verifier graphical user interface. In some embodiments, the I/O module 311 may comprise a display (for example, but not limited to, a touch screen) that may render one or more user interfaces in accordance with some embodiments of the present disclosure such as, but not limited to, one or more graphical indicia characteristic identification user interfaces. Additional details associated with the one or more graphical indicia characteristic identification user interfaces are described herein.

While the description above in connection with FIG. 2 and FIG. 3 provides example components of an example printing apparatus in accordance with some embodiments of the present disclosure, it is noted that the scope of the present disclosure is not limited to the description above. In some examples, an example printing apparatus may comprise one or more additional and/or alternative components. For example, the example printing apparatus may include, or be in communication with, one or more input elements such as, but not limited to, a keyboard input, a mouse input, a touch screen/display input, a motion input, a movement input, an audio input, a pointing device input, a joystick input, a keypad input, and/or the like. Additionally, or alternatively, the example printing apparatus may include, or be in communication with, one or more output components such as, but not limited to, an audio output, a video output, a screen/display output, a motion output, a movement output, and/or the like. Additionally, or alternatively, the example printing apparatus may include, or be in communication with, one or more other components.

As described above, there are many technical challenges and difficulties associated with printing apparatus. For example, there are many technical challenges and difficulties associated with verifying embedded graphical indicia.

In the present disclosure, the terms "indicia" or "decodable indicia" refers to one or more encoded symbols and/or sets of symbols for purposes such as, but not limited to, identification, data storage, communications, and/or the like. Example indicia in accordance with some embodiments of the present disclosure may include, but are not limited to, one or more barcodes, one or more QR codes, and/or the like.

In some embodiments, an example print image may be in the form of a graphical image. In the present disclosure, the term "embedded graphical indicia" refers to a type of indicia that is embedded in a print image that is in the form of a graphical image. For example, an example graphical image may be in formats such as, but not limited to, JPG, GIF, and/or PNG to provide a print image for an example printing apparatus to print. In such examples, embedded graphical indicia may be one or more components or parts of the example graphical image / print image.

As an example, a user may use one or more computing apparatus and/or one or more image capturing devices to generate a graphical image (for example, a PNG image) that shows a label to be printed by an example printing apparatus. In such an example, image elements of the graphical image (for example, pixels of the graphical image) may embed and/or show one or more graphical indicia (for example, one or more barcodes, one or more QR codes, and/or the like) such that the one or more graphical indicia are parts of the label in the graphical image. Continuing in this example, the user may upload the graphical image (for example, the PNG image) to an example printing apparatus as the print image for printing, and the example printing apparatus may print out the label based on the graphical image, including the one or more embedded graphical indicia (for example, one or more barcodes, one or more QR codes, and/or the like), on print media.

As described above, an example printing apparatus in accordance with some embodiments of the present disclosure may comprise or in communication with an indicium verifier. In such an example, the indicium verifier may perform one or more verification operations to verify the quality of the indicia of the printed media. For example, the indicium verifier may determine whether the print quality of the indicia satisfies quality standards. Additionally, or alternatively, the indicium verifier may analyze an image of the printed media to determine whether any indicia is missing from and/or misprinted on the printed media.

However, there are many technical challenges and difficulties associated with verifying printed media where one or more indicia are in the forms of embedded graphical indicia. For example, when one or more barcodes are embedded in a graphical image, the example printing apparatus may not recognize the existence of such embedded graphical indicia in the graphical image, and may not be able to perform proper verification operations for the embedded graphical indicia.

As an example, an example printing apparatus may utilize the indicium verifier to grade barcodes on a label as the label is being printed through a print job. In such an example, when the barcodes in the print job are defined through barcode commands, characteristics associated with the barcodes (such as, but not limited to, the number of barcodes, the types of the barcodes, the positions of the barcodes, the size of the barcodes, and/or the like) may be included in the barcode commands, and the example printing apparatus may perform verification operations based on the barcode commands. However, when the barcodes are embedded in the graphical images, characteristics associated with the barcodes (for example, the number of barcodes, the type of barcodes, the positions of the barcodes, the sizes of the barcodes, and/or the like) are not provided to the example printing apparatus. In such an example, the example printing apparatus may erroneously determine that there is no barcodes to be printed, and may erroneously determine that the printed media satisfies the applicable quality standards despite that no verification operations associated with the printed barcodes have been performed (for example, no verification on whether the printing apparatus actually printed the correct number of barcodes on the printed media, whether the position of the printed barcodes are correct, etc.). Additional reasons that an example printing apparatus may not recognize embedded graphical indicia may include, but are not limited to, the barcode types being not supported, the size is too small, the graphical image is corrupted, and/or the like.

Some methods may attempt to address such technical issues by requiring users to manually check that the indicium verifier has verified each barcode that has been printed on the print media. However, such methods are time consuming and user unfriendly, and are often prone to errors from manual counting.

Some methods may attempt to address such technical issues by storing templates in the example printing apparatus (for example, in an XML format) that define what barcodes are included in a graphical image and where on the label the barcodes are positioned. However, such methods require that the labels to be printed out first to extract the data that will make the basis for the information entered in the template. In addition, only one template can be activated by the printing apparatus at any one time, which can increase operation overhead by replacing templates when shifting jobs with different layouts.

The inability of many methods to verify embedded graphical indicia may create many technical problems. For example, in certain industries, there may be severe penalties for companies producing barcodes that are not scannable and/or meet certain quality/grading criteria.

Various embodiments of the present disclosure overcome these technical challenges and difficulties, and provide technical improvements and advantages. For example, various embodiments of the present disclosure provide example mechanisms for acknowledging that all barcodes have been identified by the printing apparatus during runtime and assuring that all embedded barcodes in a graphical image are detected and graded without having to manually review each printed label separately. In various embodiments of the present disclosure, users may not need to print the label prior to providing characteristic data associated with the barcodes to the printing apparatus, and may embed the number of barcodes (for example, in the print script itself), thereby enabling consecutive printing of labels containing images with different number of barcodes.

Various embodiments of the present disclosure may provide a simplified user interface (for example, a graphical indicia characteristic identification user interface) for the user to enter the number of barcodes in a graphical image for verification without the use of templates and without prior actions of printing the label. In some embodiments, an example graphical indicia characteristic identification user interface provide various technical benefits and advantages that include, but not limited to, providing flexibility to send consecutive jobs with varying contents without any loss of performance/throughput.

For example, various embodiments of the present disclosure may add one or more configurable data fields that can be entered and/or updated by one or more commands from the graphical indicia characteristic identification user interface (for example, the user interface of the printing apparatus (e.g. printers equipped with a touch screen / LCD screen)), web page user interfaces, mobile application user interfaces, and/or the like) where the user may enter information such as, but not limited to, the number of barcodes expected on the label when graphic barcode detection is enabled.

Various embodiments of the present disclosure may store the information entered by the user and compare against the barcodes identified by the printer based on the graphical image data object from the image buffer and generated when processing the print job. For example, an example printing apparatus in accordance with some embodiments of the present disclosure may compare predicted characteristics associated with embedded graphical indicia in a graphical image against the characteristics associated with the embedded graphical indicia that are identified by the users, and may alert the user should all barcodes not be identified and/or any barcode not be able to be graded. In other words, when there is a mismatch in the number of barcodes identified by the printing apparatus and the number defined by the user, the printing apparatus may trigger a mismatch alert for the user.

As such, various embodiments of the present disclosure provide users with means to ensure that all barcodes on the label are detected, and that a mismatch alert to the user is trigger if the count is not matching the input from the user/system. As illustrated in the various examples herein, templates are no longer required, and users will no longer need to separately compare the results from the printing apparatus against the label design.

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a SSD, solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), CD-ROM, compact disc-rewritable (CD-RW), digital versatile disc (DVD), Blu-ray disc (BD), any other non-transitory optical medium, and/or the like. Such a non-volatile computer-readable storage medium may also include ROM, PROM, EPROM, EEPROM, flash memory (e.g., Serial, NAND, NOR, and/or the like), multimedia memory cards (MMC), secure digital (SD) memory cards, SmartMedia cards, CF cards, Memory Sticks, and/or the like. Further, a non-volatile computer-readable storage medium may also include CBRAM, PRAM, FeRAM, NVRAM, MRAM, RRAM, SONOS, FJG RAM, Millipede memory, racetrack memory, and/or the like.

In some embodiments, a volatile computer-readable storage medium may include RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

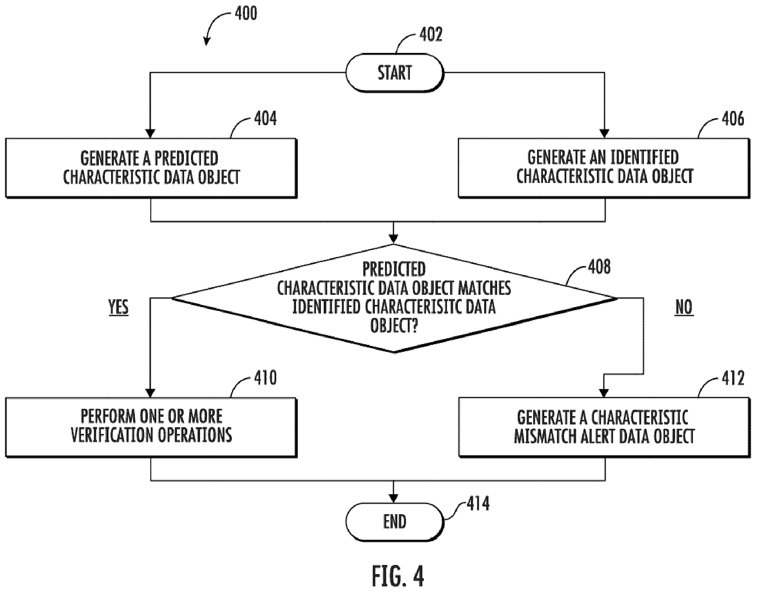

Various example methods described herein, including, for example, those as shown in FIG. 4 to FIG. 9, may provide various technical advantages and/or improvements described above.

It is noted that each block of the flowchart, and combinations of blocks in the flowchart, may be implemented by various means such as hardware, firmware, circuitry and/or other devices associated with execution of software including one or more computer program instructions. For example, one or more of the methods described in FIG. 4 to FIG. 9 may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 4, an example flow diagram 400 illustrates example methods in accordance with some embodiments of the present disclosure. For example, the example flow diagram 400 illustrate example methods for verifying embedded graphical indicia in printed media in accordance with some embodiments of the present disclosure.

As described above, there are technical challenges, deficiencies, and problems associated with printing apparatus such as, but not limited to, verifying embedded graphical indicia. Various embodiments of the present disclosure overcome such technical challenges and difficulties, and provide various technical improvements and advantages.

For example, example methods as illustrated in connection with FIG. 4 may generate a predicted characteristic data object associated with one or more embedded graphical indicia, generate an identified characteristic data object associated with the one or more embedded graphical indicia, and determine whether the predicted characteristic data object matches the identified characteristic data object. As such, example methods in connection with FIG. 4 may provide various technical benefits and advantages that include, but not limited to, improving the accuracy in detecting embedded graphical indicia from graphical images and ensuring that the verification operations associated with the embedded graphical indicia are properly performed.

In the example shown in FIG. 4, example methods in accordance with some embodiments of the present disclosure start at step/operation 402. Subsequent to and/or in response to step/operation 402, some example methods in accordance with some embodiments of the present disclosure proceed to step/operation 404. In some embodiments, an example processor (such as, but not limited to, the processor 202 of the example printing apparatus 200 described above in connection with FIG. 2, the verifier processor 309 of the example indicium verifier 303 described above in connection with FIG. 3, and/or the like) may generate a predicted characteristic data object at step/operation 404.

In the present disclosure, the term "predicted characteristic data object" refers to a type of data object that indicates, describes, and/or comprises one or more predictions on one or more characteristics associated with one or more embedded graphical indicia in a graphical image data obj ect.

For example, an example predicted characteristic data object in accordance with some embodiments of the present disclosure may indicate a predicted number associated with the one or more embedded graphical indicia. As an example, an example predicted characteristic data object may indicate that a total of one (1) barcode is predicted to be embedded in the graphical image from the graphical image data object.

Additionally, or alternatively, an example predicted characteristic data object in accordance with some embodiments of the present disclosure may indicate one or more predicted symbology types associated with the one or more embedded graphical indicia. As an example, an example predicted characteristic data object may indicate that the type of barcode embedded in the graphical image from the graphical image data object is predicted to be CODE 39.

Additionally, or alternatively, an example predicted characteristic data object may indicate one or more predicted positions associated with the one or more embedded graphical indicia. As an example, an example predicted characteristic data object may indicate that barcode embedded in the graphical image from the graphical image data object is predicted to be on the top of the label.

Additionally, or alternatively, an example predicted characteristic data object may indicate one or more predicted sizes associated with the one or more embedded graphical indicia. As an example, an example predicted characteristic data object may indicate a predicted width and/or a predicted length associated with a barcode embedded in the graphical image from the graphical image data object.

While the description above illustrates example data and/or information associated with example predicted characteristic data objects, it is noted that the scope of the present disclosure is not limited to the description above. In some embodiments, example predicted characteristic data object may indicate data and/or information that may include, but are not limited to, predicted gray levels associated with the one or more embedded graphical indicia, predicted ANSI grade levels associated with the one or more embedded graphical indicia, predicted numeric ANSI grades associated with the one or more embedded graphical indicia, predicted bar width growth percentages associated with the one or more embedded graphical indicia, and/or the like.

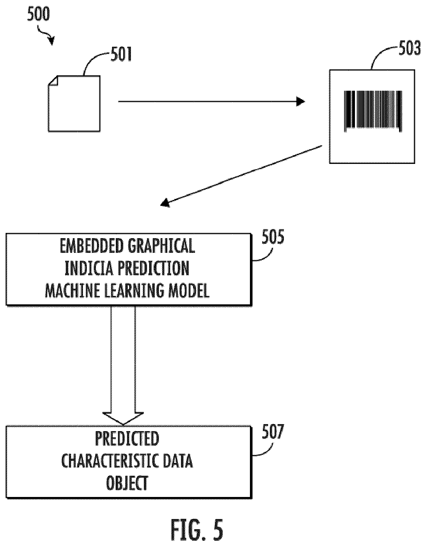

In some embodiments, an example processor in accordance with some embodiments of the present disclosure may generate a predicted characteristic data object associated with one or more embedded graphical indicia based on one or more graphical image data objects from an image buffer. Additional details associated with generating the predicted characteristic data object are described herein, including, but not limited to, those described in connection with at least FIG. 5.

Subsequent to and/or in response to step/operation 404 and/or step/operation 402, some example methods in accordance with some embodiments of the present disclosure proceed to step/operation 406. In some embodiments, an example processor (such as, but not limited to, the processor 202 of the example printing apparatus 200 described above in connection with FIG. 2, the verifier processor 309 of the example indicium verifier 303 described above in connection with FIG. 3, and/or the like) may generate an identified characteristic data object at step/operation 406.

In the present disclosure, the term "identified characteristic data object" refers to a type of data object that indicates, describes and/or comprises one or more user identified, actual characteristics associated with one or more embedded graphical indicia in a graphical image data obj ect.

For example, an example identified characteristic data object in accordance with some embodiments of the present disclosure may indicate an actual number associated with the one or more embedded graphical indicia. As an example, an example identified characteristic data object may indicate that a user has identified a total of one (1) barcode that is embedded in the graphical image from the graphical image data object.

Additionally, or alternatively, an example identified characteristic data object in accordance with some embodiments of the present disclosure may indicate one or more actual symbology types associated with the one or more embedded graphical indicia. As an example, an example identified characteristic data object may indicate that a user has identified the type of barcode embedded in the graphical image from the graphical image data object to be CODE 39.

Additionally, or alternatively, an example identified characteristic data object may indicate one or more actual positions associated with the one or more embedded graphical indicia. As an example, an example identified characteristic data object may indicate that a user has identified that barcode embedded in the graphical image from the graphical image data object is positioned on the top of the label.

Additionally, or alternatively, an example identified characteristic data object may indicate one or more actual sizes associated with the one or more embedded graphical indicia. As an example, an example identified characteristic data object may indicate that a user has identified a width and/or a length associated with a barcode embedded in the graphical image from the graphical image data object.

While the description above illustrates example data and/or information associated with example identified characteristic data objects, it is noted that the scope of the present disclosure is not limited to the description above. In some embodiments, example identified characteristic data object may indicate data and/or information that may include, but are not limited to, actual gray levels associated with the one or more embedded graphical indicia, actual ANSI grade levels associated with the one or more embedded graphical indicia, actual numeric ANSI grades associated with the one or more embedded graphical indicia, actual bar width growth percentages associated with the one or more embedded graphical indicia, and/or the like.

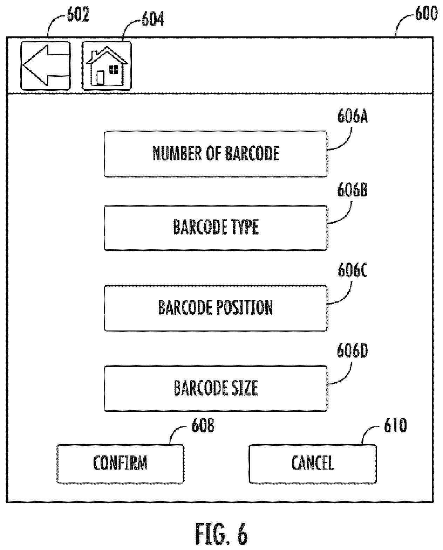

In some embodiments, an example processor generates an identified characteristic data object associated with the one or more embedded graphical indicia based on one or more graphical indicia characteristic user input data objects. In some embodiments, the example processor receives the one or more graphical indicia characteristic user input data objects from a graphical indicia characteristic identification user interface. Additional details associated with the graphical indicia characteristic user input data objects and the graphical indicia characteristic identification user interfaces are described herein, including, but not limited to, those described in connection with FIG. 6 to FIG. 8.

Subsequent to and/or in response to step/operation 404 and/or step/operation 406, some example methods in accordance with some embodiments of the present disclosure proceed to step/operation 408. In some embodiments, an example processor (such as, but not limited to, the processor 202 of the example printing apparatus 200 described above in connection with FIG. 2, the verifier processor 309 of the example indicium verifier 303 described above in connection with FIG. 3, and/or the like) may determine whether the predicted characteristic data object matches identified characteristic data object at step/operation 408.

For example, an example processor may determine whether the predicted number associated with the one or more embedded graphical indicia based on the predicted characteristic data object generated at step/operation 404 matches the actual number associated with the one or more embedded graphical indicia based on the identified characteristic data object generated at step/operation 406.

Additionally, or alternatively, an example processor may determine whether the predicted symbology types associated with the one or more embedded graphical indicia based on the predicted characteristic data object generated at step/operation 404 matches the actual symbology types associated with the one or more embedded graphical indicia based on the identified characteristic data object generated at step/operation 406.

Additionally, or alternatively, an example processor may determine whether the one or more predicted positions associated with the one or more embedded graphical indicia based on the predicted characteristic data object generated at step/operation 404 matches one or more actual positions associated with the one or more embedded graphical indicia based on the identified characteristic data object generated at step/operation 406.

Additionally, or alternatively, an example processor may determine whether the one or more predicted sizes associated with the one or more embedded graphical indicia based on the predicted characteristic data object generated at step/operation 404 matches one or more actual sizes associated with the one or more embedded graphical indicia based on the identified characteristic data object generated at step/operation 406,

While the description above provides some example comparison operations performed by the example processor, it is noted that the scope of the present disclosure is not limited to the examples above.

If, at step/operation 408, the example processor determines that the predicted characteristic data object matches the identified characteristic data object, some example methods of the present disclosure proceed to step/operation 410. At step/operation 410, an example processor (such as, but not limited to, the processor 202 of the example printing apparatus 200 described above in connection with FIG. 2, the verifier processor 309 of the example indicium verifier 303 described above in connection with FIG. 3, and/or the like) may perform one or more verification operations at step/operation 410.

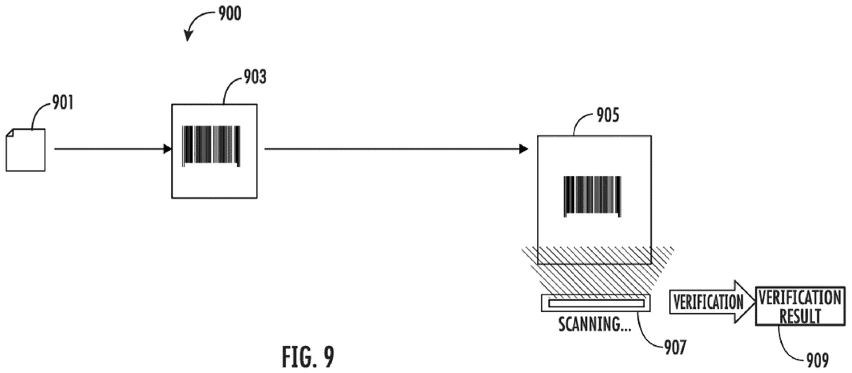

For example, in response to determining that the predicted characteristic data object matches the identified characteristic data object, an example processor may perform one or more verification operations associated with the printed media that may include, but not limited to, causing the printing apparatus to print the print image on the print media, capturing an image of the printed media, and determining whether the captured image of the print media matches the print image from the graphical image data object in the image buffers. Additional details associated with verification operations may include, but not limited to, those described in connection with at least FIG. 9.

If, at step/operation 408, the example processor determines that the predicted characteristic data object does not match identified characteristic data object, some example methods of the present disclosure proceed to step/operation 412. At step/operation 412, an example processor (such as, but not limited to, the processor 202 of the example printing apparatus 200 described above in connection with FIG. 2, the verifier processor 309 of the example indicium verifier 303 described above in connection with FIG. 3, and/or the like) may generate a characteristic mismatch alert data object at step/operation 412.

In the present disclosure, the term "characteristic mismatch alert data object" refers to a type of data object indicating that there is a mismatch between predicted characteristics associated with the one or more embedded graphical indicia and actual characteristics associated with the one or more embedded graphical indicia.

For example, in response to determining that the predicted characteristic data object does not match the identified characteristic data object, an example processor in accordance with some embodiments of the present disclosure may generate a characteristic mismatch alert data object that indicates an incomplete verification operation associated with the printed media. In such an example, the printing apparatus may render the characteristic mismatch alert data object on a user interface (such as, but not limited to, a user interface of the printer) so that the user is notified that the example printing apparatus cannot perform a complete verification of the printed media due to unable to verify embedded graphical indicia (for example, the image file is corrupted, the embedded graphical indicia is not supported, etc.)

While the description above provides some example operations when the predicted characteristic data object does not match identified characteristic data object, it is noted that the scope of the present disclosure is not limited to the description above. In some examples, an example method may perform one or more operations. For example, example methods in accordance with some embodiments of the present disclosure may forgo printing the graphical image in response to determining that the predicted characteristic data object does not match identified characteristic data object. Additionally, or alternatively, example methods in accordance with some embodiments of the present disclosure may perform verification operations based on characteristics defined by the identified characteristic data objects (instead of based on characteristic defined by the predicted characteristic data objects) in response to determining that the predicted characteristic data object does not match identified characteristic data object.

Referring back to FIG. 4, subsequent to and/or in response to step/operation 410 and/or step/operation 412, some example methods of the present disclosure proceed to step/operation 414 and end.

Referring now to FIG. 5, an example process chart 500 illustrates example methods in accordance with some embodiments of the present disclosure. For example, the example process chart 500 illustrates example operations associated with generating predicted characteristic data objects in accordance with some embodiments of the present disclosure.

In the example shown in FIG. 5, some example methods of the present disclosure may include receiving one or more print script data objects 501. For example, the one or more print scripted data objects may be received by one or more processors associated with the example printing apparatus (such as, but not limited to, the processor 202 of the example printing apparatus 200 described above in connection with FIG. 2, the verifier processor 309 of the example indicium verifier 303 described above in connection with FIG. 3, and/or the like).

In the present disclosure, the term "print script data object" refers to a type of data object that comprises one or more processor executable instructions and/or commands that define printing operations for an example printing apparatus. For example, an example print script data object may comprise, describe, and/or indicate data and/or information such as, but not limited to, print layout, number of printed media, size of the print media, and/or the like. Additionally, or alternatively, an example print script data object may comprise one or more print images (for example, in the form of graphical images).

In some embodiments, some example methods according to FIG. 5 may include generating one or more graphical image data objects 503 based at least in part on the one or more print script data objects 501.

For example, an example processor associated with the example printing apparatus (such as, but not limited to, the processor 202 of the example printing apparatus 200 described above in connection with FIG. 2, the verifier processor 309 of the example indicium verifier 303 described above in connection with FIG. 3, and/or the like) may generate the one or more graphical image data objects 503 based at least in part on extracting data and/or information associated with one or more graphical images from the print script data object. For example, the one or more processor executable instructions and/or commands from the print script data object may define or indicate one or more memory addresses where the one or more print images in the form of graphical images are stored in a memory. In such an example, the example processor may retrieve the one or more graphical images based on the memory addresses, and may generate the one or more graphical image data objects 503 based on the one or more graphical images.

In some embodiments, some example methods according to FIG. 5 may include storing the one or more graphical image data objects 503 in an image buffer. For example, the example processor may store the one or more graphical image data objects 503 in the image buffer 214 described above in connection with FIG. 2. Additionally, or alternatively, the example processor may store the one or more graphical image data objects 503 in the image buffer 321 described above in connection with FIG. 3.

In some embodiments, some example methods according to FIG. 5 may include generating the predicted characteristic data object 507 based at least in part on inputting the one or more graphical image data objects 503 to an embedded graphical indicia prediction machine learning model 505.

In the present disclosure, the term "embedded graphical indicia prediction machine learning model" refers to a type of machine learning model that has been trained to generate predictions on characteristics associated with embedded graphical indicia in graphical image data objects. For example, the embedded graphical indicia prediction machine learning model 505 may be trained to generate one or more predicted characteristic data objects that may include, for example, but not limited to, a predicted number associated with the one or more embedded graphical indicia in the graphical image data objects, one or more predicted symbology types associated with the one or more embedded graphical indicia in the graphical image data objects, one or more predicted positions associated with the one or more embedded graphical indicia in the graphical image data objects, one or more predicted sizes associated with the one or more embedded graphical indicia in the graphical image data objects, and/or the like. For example, an example embedded graphical indicia prediction machine learning model may be trained based on inputting graphical image data objects that are associated with predetermined number of embedded graphical indicia, predetermined symbology types of embedded graphical indicia, predetermined positions of embedded graphical indicia, predetermined sizes of embedded graphical indicia, and/or the like. In such an example, the example embedded graphical indicia prediction machine learning model may adjust its parameters so as to generate a predicted number of embedded graphical indicia that is the same as the predetermined number of embedded graphical indicia, predicted symbology types of embedded graphical indicia that are the same as the predetermined symbology types of embedded graphical indicia, predicted positions of embedded graphical indicia that are the same as the predetermined positions of embedded graphical indicia, predicted sizes of embedded graphical indicia that is the same as the predetermined sizes of embedded graphical indicia, and/or the like.

Example embedded graphical indicia prediction machine learning models in accordance with some embodiments of the present disclosure may include, but are not limited to, Convolutional Neural Networks (CNNs), Support Vector Machines (SVMs), and/or the like.

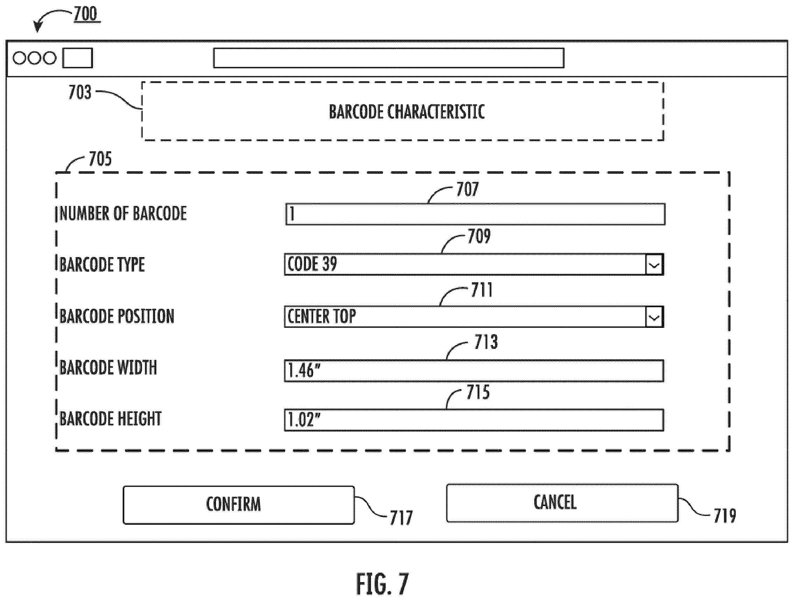

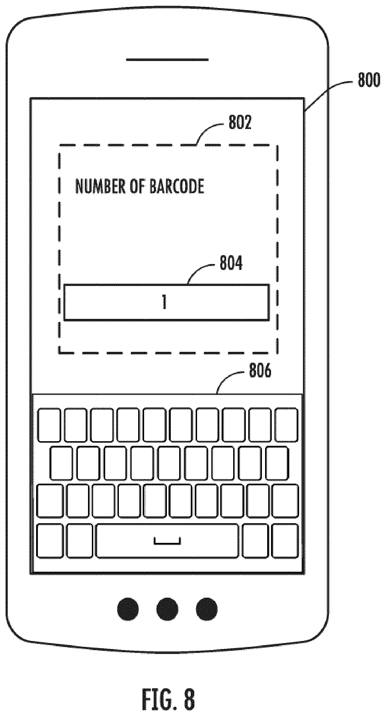

Referring now to FIG. 6, FIG. 7, and FIG. 8, example graphical indicia characteristic identification user interfaces in accordance with some embodiments of the present disclosure are provided. In particular, FIG. 6 illustrates an example graphical indicia characteristic identification user interface 600 that may be rendered on a display associated with an example printing apparatus. FIG. 7 illustrates an example graphical indicia characteristic identification user interface 700 that may be rendered on a web interface. FIG. 8 illustrates an example graphical indicia characteristic identification user interface 800 that may be rendered on a display associated with a mobile device. In each of the examples shown in FIG. 6, FIG. 7, and FIG. 8, one or more graphical indicia characteristic user input data objects may be generated based on user inputs through the example graphical indicia characteristic identification user interfaces.

In the example shown in FIG. 6, the example graphical indicia characteristic identification user interface 600 comprises various user interface elements such as, but not limited to, a back button 602, a home button 604, a confirm button 608, and a cancel button 610. In some embodiments, the example graphical indicia characteristic identification user interface 600 also comprises data fields such as, but not limited to, a number of barcode data field 606A, a barcode type data field 606B, a barcode position data field 606C, and a barcode size data field 606D.

For example, in response to a user selection of the number of barcode data field 606A, the example graphical indicia characteristic identification user interface 600 may be updated to include one or more user input interface elements (for example, one or more input boxes) that allow a user to input the number of barcodes embedded in the graphical image. In some embodiments, an example processor may generate one or more graphical indicia characteristic user input data objects based on the one or more user inputs.

Additionally, or alternatively, in response to a user selection of the barcode type data field 606B, the example graphical indicia characteristic identification user interface 600 may be updated to provide one or more user input interface elements (for example, one or more input boxes) that allow a user to input the type of barcodes embedded in the graphical image. In some embodiments, an example processor may generate one or more graphical indicia characteristic user input data objects based on the one or more user inputs.

Additionally, or alternatively, in response to a user selection of the barcode position data field 606C, the example graphical indicia characteristic identification user interface 600 may be updated to provide one or more user input interface elements (for example, one or more input boxes) that allow a user to input the barcode position associated with the barcodes embedded in the graphical image. In some embodiments, an example processor may generate one or more graphical indicia characteristic user input data objects based on the one or more user inputs.

Additionally, or alternatively, in response to a user selection of the barcode size data field 606D, the example graphical indicia characteristic identification user interface 600 may be updated to provide one or more user input interface elements (for example, one or more input boxes) that allow a user to input the barcode size associated with the barcodes embedded in the graphical image. In some embodiments, an example processor may generate one or more graphical indicia characteristic user input data objects based on the one or more user inputs.

In some embodiments, an example processor may generate one or more identified characteristic data objects that comprise one or more of the graphical indicia characteristic user input data objects described above.

In the example shown in FIG. 7, the example graphical indicia characteristic identification user interface 700 comprises various user interface elements such as, but not limited to, a header section 703, a confirm button 717, and a cancel button 719. In some embodiments, the example graphical indicia characteristic identification user interface 700 also comprises input data fields 705 where a user may provide one or more inputs.

For example, in response to a user input in the number of barcode input data field 707, an example processor may generate a graphical indicia characteristic user input data object that indicates and/or comprises the number of barcode data received from the number of barcode input data field 707. As an example, the graphical indicia characteristic user input data object may indicate that the number of barcodes embedded in the graphical image is one (1).

Additionally, or alternatively, in response to a user input in the barcode type input data field 709, an example processor may generate a graphical indicia characteristic user input data object that indicates and/or comprises the barcode type data received from the barcode type input data field 709. As an example, the graphical indicia characteristic user input data object may indicate that the barcode type of barcodes embedded in the graphical image is CODE 39.

Additionally, or alternatively, in response to a user input in the barcode position input data field 711, an example processor may generate a graphical indicia characteristic user input data object that indicates and/or comprises the barcode position data received from the barcode position input data field 711. As an example, the graphical indicia characteristic user input data object may indicate that the barcode position of barcodes embedded in the graphical image is center top.

Additionally, or alternatively, in response to a user input in the barcode width input data field 713, an example processor may generate a graphical indicia characteristic user input data object that indicates and/or comprises the barcode width data received from the barcode width input data field 713. As an example, the graphical indicia characteristic user input data object may indicate that the barcode width of barcodes embedded in the graphical image is 1.46".

Additionally, or alternatively, in response to a user input in the barcode height input data field 715, an example processor may generate a graphical indicia characteristic user input data object that indicates and/or comprises the barcode height data received from the barcode height input data field 715. As an example, the graphical indicia characteristic user input data object may indicate that the barcode height of barcodes embedded in the graphical image is 1.02".

In some embodiments, an example processor may generate one or more identified characteristic data objects that comprise one or more of the graphical indicia characteristic user input data objects described above.

In the example shown in FIG. 8, the example graphical indicia characteristic identification user interface 800 comprises various user interface elements such as, but not limited to, a touch screen keyboard 806, a number of barcode section 802, and a number of barcode input data field 804. For example, in response to a user input in the number of barcode input data field 804 through the touch screen keyboard 806, an example processor may generate a graphical indicia characteristic user input data object that indicates the number of barcode data received from the number of barcode input data field 804.

While FIG. 6 to FIG. 8 illustrate example graphical indicia characteristic identification user interfaces in accordance with some embodiments of the present disclosure, it is noted that the scope of the present disclosure is not limited to such examples above. For example, an example graphical indicia characteristic identification user interface in accordance with some embodiments of the present disclosure may comprise one or more additional and/or alternative user interface elements.

Referring now to FIG. 9, an example process chart 900 illustrates example methods in accordance with some embodiments of the present disclosure. For example, the example process chart 900 illustrates example operations associated with performing one or more verification operations associated with the printed media.

In the example shown in FIG. 9, the example printing apparatus may generate the graphical image data object 903 based on the print script data object 901 (similar to those described above in connection with at least FIG. 5) and store the graphical image data object 903 in the image buffer. In some embodiments, the example printing apparatus may generate the printed media 905 based on printing the print image (in the form of a graphical image) from the graphical image data object 903 on print media. In some embodiments, in response to determining that the predicted characteristic data object matches the identified characteristic data object (similar to those described above), an example printing apparatus in accordance with some embodiments of the present disclosure may perform one or more verification operations associated with the printed media 905.

For example, an indicium verifier 907 associated with the example printing apparatus (for example, similar to the indicium verifier 125 described above in connection with FIG. 1A to FIG. 1C, the indicium verifier 218 described above in connection with FIG. 2, the indicium verifier 303 described above in connection with FIG. 3, and/or the like) may capture an image of the printed media 905 and generate verification results 909. In some embodiments, the verification results 909 may indicate whether the printed indicia on the printed media 905 satisfy one or more applicable standards, similar to various examples described above.

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation. It should be understood that the examples and embodiments in the Appendix are also for illustrative purposes and are non-limiting in nature. The contents of the Appendix are incorporated herein by reference in their entirety.

## Claims

1. A printing apparatus for verifying embedded graphical indicia in printed media, the printing apparatus comprising at least one processor and at least one memory comprising program code, the at least one memory and the program code configured to, with the at least one processor, cause the printing apparatus to:
generate a predicted characteristic data object associated with one or more embedded graphical indicia based on one or more graphical image data objects from an image buffer;
generate an identified characteristic data object associated with the one or more embedded graphical indicia based on one or more graphical indicia characteristic user input data objects;
determine whether the predicted characteristic data object matches the identified characteristic data object; and
in response to determining that the predicted characteristic data object matches the identified characteristic data object, perform one or more verification operations associated with the printed media.

2. The printing apparatus of claim 1, wherein, prior to generating the predicted characteristic data object, the at least one memory and the program code are configured to, with the at least one processor, cause the printing apparatus to:
receive one or more print script data objects;
generate the one or more graphical image data objects based at least in part on the one or more print script data objects; and
store the one or more graphical image data objects in the image buffer.

3. The printing apparatus of claim 1, wherein the at least one memory and the program code are configured to, with the at least one processor, cause the printing apparatus to generate the predicted characteristic data object based at least in part on inputting the one or more graphical image data objects to an embedded graphical indicia prediction machine learning model.

4. The printing apparatus of claim 1, wherein the at least one memory and the program code are configured to, with the at least one processor, cause the printing apparatus to:
receive the one or more graphical indicia characteristic user input data objects from a graphical indicia characteristic identification user interface.

5. The printing apparatus of claim 1, wherein the predicted characteristic data object indicates a predicted number associated with the one or more embedded graphical indicia, wherein the identified characteristic data object indicates an actual number associated with the one or more embedded graphical indicia.

6. The printing apparatus of claim 1, wherein the predicted characteristic data object indicates one or more predicted symbology types associated with the one or more embedded graphical indicia, wherein the identified characteristic data object indicates one or more actual symbology types associated with the one or more embedded graphical indicia.

7. The printing apparatus of claim 1, wherein the predicted characteristic data object indicates one or more predicted positions associated with the one or more embedded graphical indicia, wherein the identified characteristic data object indicates one or more actual positions associated with the one or more embedded graphical indicia.

8. The printing apparatus of claim 1, wherein the predicted characteristic data object indicates one or more predicted sizes associated with the one or more embedded graphical indicia, wherein the identified characteristic data object indicates one or more actual sizes associated with the one or more embedded graphical indicia.

9. The printing apparatus of claim 1, wherein the at least one memory and the program code are configured to, with the at least one processor, cause the printing apparatus to:
in response to determining that the predicted characteristic data object does not match the identified characteristic data object, generate a characteristic mismatch alert data object.

10. The printing apparatus of claim 9, wherein the characteristic mismatch alert data object indicates an incomplete verification operation associated with the printed media.

11. A computer program product for verifying embedded graphical indicia in printed media, the computer program product comprising at least one non-transitory computer-readable storage medium having computer-readable program code portions stored therein, the computer-readable program code portions comprising an executable portion configured to:
generate a predicted characteristic data object associated with one or more embedded graphical indicia based on one or more graphical image data objects from an image buffer;
generate an identified characteristic data object associated with the one or more embedded graphical indicia based on one or more graphical indicia characteristic user input data objects;
determine whether the predicted characteristic data object matches the identified characteristic data object; and
in response to determining that the predicted characteristic data object matches the identified characteristic data object, perform one or more verification operations associated with the printed media.

12. The computer program product of claim 11, wherein the computer-readable program code portions comprise the executable portion configured to:
receive one or more print script data objects;
generate the one or more graphical image data objects based at least in part on the one or more print script data objects; and
store the one or more graphical image data objects in the image buffer.

13. The computer program product of claim 11, wherein the computer-readable program code portions comprise the executable portion configured to generate the predicted characteristic data object based at least in part on inputting the one or more graphical image data objects to an embedded graphical indicia prediction machine learning model.

14. The computer program product of claim 11, wherein the computer-readable program code portions comprise the executable portion configured to:
receive the one or more graphical indicia characteristic user input data objects from a graphical indicia characteristic identification user interface.

15. The computer program product of claim 11, wherein the predicted characteristic data object indicates a predicted number associated with the one or more embedded graphical indicia, wherein the identified characteristic data object indicates an actual number associated with the one or more embedded graphical indicia.
